# EUROPEAN PATENT SPECIFICATION

(11) **EP 1 708 877 B1**
(45) Date of publication and mention of the grant of the patent: **24.09.2014**
(21) Application number: 04802058.0
(22) Date of filing: 15.12.2004
(51) Int. Cl.: B27N 3/04

(54) **HARD WOOD STRAND PRODUCTS**
SPANPLATTENPRODUKT MIT AUSGERICHTETEN SPÄNEN AUS HARTHOLZ
PRODUITS DE BOIS DUR A COPEAUX ORIENTES

(30) Priority: 27.01.2004 AU 2004900364
(43) Date of publication of application: 11.10.2006
(60) Divisional application: 12158508.7
(73) Proprietor: Lignor Limited, Keppel Sands, QLD 4702 (AU)
(72) Inventor: BURTON, Peter, Edward, Keppel Sands, QLD 4702 (AU); COULTHARD, Graham, Thomas, Victoria 3810 (AU)
(74) Representative: Matthews, Derek Peter
(86) International application number: PCT/AU2004/001756
(87) International publication number: WO 2005/070667

(56) References cited:
- CN-A- 1 149 524
- US-A- 4 246 310
- US-A- 4 361 612
- US-A- 4 610 913
- SETSUO IWAKIRI ET AL: "Production of oriented strand board (OSB) from Eucalyptus Grandis with different resin content, wax sizing and face to core layer ratios" CIÊNCIA FLORESTAL, [Online] vol. 13, no. 1, 2003, pages 89-94, XP002543618 Santa Maria ISSN: 0103-9954 Retrieved from the Internet: URL:http://tiny.cc/kkMiB> [retrieved on 2009-08-31]
- SETSUO IWAKIRI ET AL: "Use of Eucalyptus wood for oriented strand board (OSB) manufacturing" CERNE, [Online] vol. 10, no. 1, June 2004 (2004-06), pages 46-53, XP002543619 Lavras ISSN: 0104-7760 Retrieved from the Internet: URL:http://tiny.cc/nJn1L> [retrieved on 2009-08-31]
- LAM F. ET AL: 'Modern Structural Wood Products.' PROG.STRUC.ENGNG. MATER. vol. 3, 2001, pages 238 - 245, XP008138006
- 'DeltaStrand Triangular Lumber (TSL)', [Online] XP008138007 Retrieved from the Internet: <URL:http://www.greenvilleme.com/woodcompos ites/deltastrand.html>
- DATABASE WPI Week 200334, Derwent Publications Ltd., London, GB; Class P63, AN 2003-355654, XP008109502 & CN 1 393 335 A (GUO) 29 January 2003

## Description

### BACKGROUND TO THE INVENTION

This invention relates to hardwood products according to claim 1.

A number of man made timber products are known including particle board (PB), medium density fibreboard (MDF), plywood, laminated veneer lumber (LVL) and oriented strand board (OSB).

Particle board lacks sufficient strength for most structural uses. Plywoods require veneer sheets from relatively high grade logs. MDF products have a number of uses but generally lack structural strength and moisture resistance. OSB and LVL products have a broad range of uses but also suffer from a relatively low resistance to moisture. Their structural strength and holding capacity for fastenings is also directional.

LVL is an adaptation of old technology from the plywood industry and is similarly reliant on old or larger diameter trees, typically 40 years old or more, and around 500mm in diameter. This provides a relatively low conversion rate from log to LVL product.

Laminated strand lumber (LSL) is another man made timber product but is based on softwoods such as aspen and yellow poplar. These species grow relatively rapidly and this product has also found commercial use as a construction lumber.

An oriented strand board (OSB) manufactured from Eucalyptus Grandis and a phenol-formaldehyde resin is described in the publication;
SETSUO IWAKIRI ET AL: "Production of oriented strand board (OSB) from Eucalyptus Grandis with different resin content, wax sizing and face to core layer ratios", CIÊNCIA FLORESTAL, [Online] vol. 13, no. 1, 2003, pages 89-94, Santa Maria ISSN: 0103-9954 Retrieved from the Internet: URL:http://tiny.cc/kkMiB

### SUMMARY OF THE INVENTION

It is an object of the present invention to provide an improved strand lumber or board product formed from one or more hardwoods or at least to provide an alternative to existing products.

In one aspect the invention may be said to reside in a strand lumber or board product including substantially aligned strands of one or more eucalypts species bonded together with a binder including an isocyanate resin.

In a preferred embodiment the eucalypt species are Bluegum (E.Globulus), Karri (E.Diversicolor), Sydney Bluegum (E.Saligna), Marri (E.Calophylla) or Jarrah (E.Marginata). and the binder includes a polymeric methane di-isocyanate (PMDI) resin. The binder preferably also includes a wax such as a paraffin emulsion.

Preferably the strands have an average length of between 145mm and 180mm, an average width of about 10 to 25mm, and an average thickness of between 0.5mm and 1.5mm. Preferably at least 70% of the strands are fully aligned.

In a first broad form the present invention seeks to provide a hard wood strand product according to claim 1.

Typically the eucalypts are selected from the species such as Bluegum (E. Globulus), Karri (E. Diversicolor), Sydney Bluegum (E. Saligna), Marri (E. Calophylla) or Jarrah (E. Marginata).

Typically the strands have an average length between 145mm and 180mm.

Typically the strands have an average width of about 10 to 25mm.

Typically the strands have an average thickness between 0.5mm and 1.5mm.

Typically at least 70% of the strands are fully aligned.

Typically the product has a density of between 600kg/m3 to 850 kg/m3.

Typically the product according Is a lumber or board product.

Typically the product has a modulus of elasticity ≥ 14,000 N/mm2.

### DESCRIPTION OF FIGURE

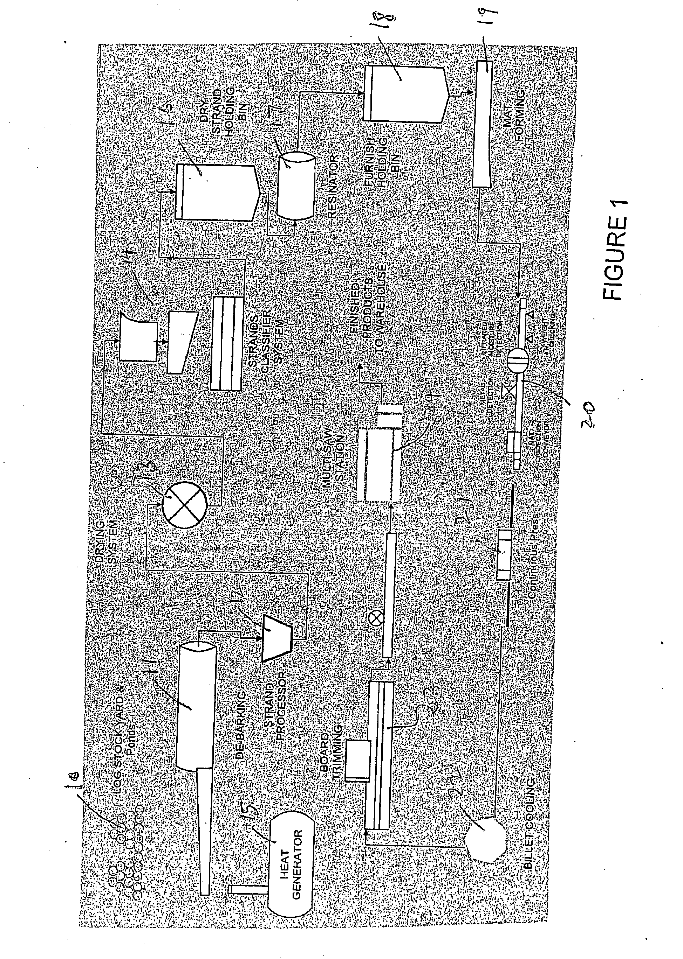

Preferred embodiments of the invention will be described with reference to the accompanying drawing which schematicaily shows a method of forming a strand lumber product.

### DETAILED DESCRIPTION OF THE PREFERRED EMBODIMENTS

Referring to the drawing it will be appreciated that the invention can be implemented in a variety of different products for a range of purposes. The process outlined here is based on the Slempelkamp ContIRoll^{™} system and is given by way of example only. Other processes for manufacturing strand lumber or board products may also be suitable.

As shown in the drawing, the process begins with harvested logs of the genus eucalyptus and perhaps other similar hard wood logs 10. The preferred eucalypt species are Bluegum (E.Globulus), Karri (E.Diversicolor), Sydney Bluegum (E.Sallgna), Marri (E.Calophylla) or Jarrah (E.Marginata). In the case of plantation trees such as Bluegum (E.Globulus) and Sydney Bluegum (E.Saligna) the trees are preferably around 8 to 12 years old and have a diameter of around 150 to 200mm. In the case of forest thinnings such as Karri (E.Diversicolor), Marri (E.Calophylla) or Jarrah (E.Marginata) the trees are preferably less than 30 years old and less than 400mm diameter. Single species may be used in a particular product or multiple species may be combined.

The logs are debarked 11 before passing through a strander 12. A ring strander is typically used to cut logs of fixed or random length into strands of a specified length, width and thickness. The strands are preferably formed with a length of about 145mm to 180mm, a width of about 10 to 25mm and a thickness of about 0.5 to 1.5mm.

The strands are dried 13 to preferably less than 5% moisture and are then classified in sieves 14 according to product specifications. A bin 16 holds the dried and classified strands until required.

Waste bark or rejected strands and fines provide the fuel for a heat plant 15 that generates heat for the drier and other parts of the process. About 70% of the original logs can be used to form product. Most of the remaining 30% can be used in the heat plant.

From bin 16 the strands are conveyed on demand to a resin blender 17 in which resin and wax are added in required proportions, typically about 6 to 10 % of dry matter and 2% of dry matter respectively. The mixed strand resin and wax is known as "furnish" and is held in a holding bin 18.

The binder is a polymeric methane di-isocyanate (PMDI) resin. The preferred wax is a paraffin emulsion such as Mobilcer^{™} available from Mobile Australia, or similar products available from Dynea and Oest. Other additives such as pesticides, fungicides and fire retardants can be added at this point and mixed to ensure uniform distribution throughout the finished product matrix.

From bin 18, the furnish is supplied to a mat former 19 where the strands are aligned and deposited to form a mat of the required mass. A combination of alignment and mass controls the mechanical properties of the mat produced. The strands are formed in substantially aligned or unidirectional arrangement. Typically at least 70% of the strands are aligned. Some board products may require a central layer with strands aligned perpendicular to top and/or bottom layers.

The mat then passes a checking station 20 which carries out weight, moisture and metal detection. Any rejected material is conveyed either as waste to the heat plant or set aside for special processing.

Mats which pass the checking station are passed through a preheating station prior to the continuous press 21 to form billets or boards, typically around 30 to 90 mm in thickness for billets and around 8 to 30 mm thickness for boards, all up to 2.7m wide and 15m long. The press heats the material to above 100°C for at least 1 minute. The billets are cooled 22 and trimmed 23 and/or sawn 24 into construction timber products.

A product formed from eucalypts using a process of this kind can be manufactured with full structural rating, and free of knots, bow, twist and wane. The density profile of the material is also substantially uniform. It may in the case of the board product be suitable for uses such as flooring, concrete formwork, decking material and in the case of lumber for structural wood products such as beams and columns, headers and lintels, joists and rafters, walls, studs and plates, and joinery products for example.

The product has been demonstrated to provide a number of advantages over most other softwood and hardwood products. It exhibits a high surface soundness, moisture resistance and shows a low swell rate in the presence of moisture. Additionally, the screw and nail holding performance is high in all planes.

Test products using Bluegum ( E. Globulus) logs and Karri ( E. Diversicolor), thinnings had the following characteristics :
1. Modulus of elasticity of around 14,000 N/mm² for Bluegum and 20,000 N/mm² for Karri.
2. Swell of less than 2% in a standard 24 hour moisture swell test for both products.
3. An internal bond strength of 1.21 N/mm².
4. High screw and nailing performance in all planes.
5. Uniform density profile.
6. A surface soundness of 2.42 N/mm².

These characteristics, particularly the modulus of elasticity are substantially better than those of alternative products, such as Radiata glulam, Douglas fir glulam, Hyspan LVL and MGP12 Pine, for which the moduli are around 12,500 N/mm², 13,500 N/mm², 13,500 N/mm² and 12,700 N/mm² respectively, for example.

## Claims

1. A hard wood strand product including substantially aligned strands of one or more eucalypts, **characterised in that** the strands are bonded together with a polymeric methane di-isocyanate resin binder including a wax.

2. A product as in claim 1 wherein the eucalypts are selected from the species such as Bluegum (E. Globulus), Karri (E. Diversicolor), Sydney Bluegum (E. saliigna), Marri (E. Calophylla) or Jarrah (E. Marginata).

3. A product as In claim 1 wherein the strands have an average length between 145mm and 180mm.

4. A product as in claim 1 wherein the strands have an average width of about 10 to 25mm.

5. A product as in claim 1 wherein the strands have an average thickness between 0.5mm and 1.5mm.

6. A product as in claim 1 wherein at least 70% of the strands are fully aligned.

7. A product as in claim 1 having a density of between 600kg/m³ to 850 kg/m³.

8. A product according to claim 1 which is a lumber or board product.

9. A product according to claim 1 having a modulus of elasticity ≥ 14,000 N/mm².

## Patentansprüche

1. Hartholzstreifenprodukt, das im Wesentlichen ausgerichtete Streifen von einem oder mehreren Eukalyptusarten umfasst, **dadurch gekennzeichnet, dass** die Streifen mit einem polymeren Methandiisozyanatharzbindemittel zusammengeklebt sind, das ein Wachs umfasst.

2. Produkt nach Anspruch 1, wobei die Eukalyptusbäume aus Arten, wie zum Beispiel Blue Gum (E. globulus), Karri (E. diversicolor), Sydney Blue Gum (E. saligna), Marri (E. calophylla) oder Jarrah (E. marginata), ausgewählt werden.

3. Produkt nach Anspruch 1, wobei die Streifen eine durchschnittliche Länge zwischen 145 mm und 180 mm haben.

4. Produkt nach Anspruch 1, wobei die Streifen eine durchschnittliche Breite von etwa 10 bis 25 mm haben.

5. Produkt nach Anspruch 1, wobei die Streifen eine durchschnittliche Dicke zwischen 0,5 mm und 1,5 mm haben.

6. Produkt nach Anspruch 1, wobei mindestens 70 % der Streifen vollständig ausgerichtet sind.

7. Produkt nach Anspruch 1, das eine Dichte zwischen 600 kg/m³ und 850 kg/m³ hat.

8. Produkt nach Anspruch 1, das ein Holz- oder Plattenprodukt ist.

9. Produkt nach Anspruch 1, das einen Elastizitätsmodul ≥14.000 N/mm² hat.

## Revendications

1. Un produit de copeaux de bois dur incluant des copeaux substantiellement alignés d'un ou plusieurs eucalyptus, **caractérisé en ce que** les copeaux sont liés entre eux avec un liant de résine de méthane di-isocyanate polymérique incluant une cire.

2. Un produit tel que dans la revendication 1 dans lequel les eucalyptus sont sélectionnés parmi les espèces telles que Bluegum (E. Globulus), Karri (E. Diversicolor), Sydney Bluegum (E. Saligna), Marri (E. Calophylla) ou Jarrah (E. Marginata).

3. Un produit tel que dans la revendication 1 dans lequel les copeaux ont une longueur moyenne entre 145 mm et 180 mm.

4. Un produit tel que dans la revendication 1 dans lequel les copeaux ont une largeur moyenne d'environ 10 à 25 mm.

5. Un produit tel que dans la revendication 1 dans lequel les copeaux ont une épaisseur moyenne entre 0,5 mm et 1,5 mm.

6. Un produit tel que dans la revendication 1 dans lequel au moins 70% des copeaux sont totalement alignés.

7. Un produit tel que dans la revendication 1 ayant une densité entre 600 kg/m³ et 850 kg/ kg/m³.

8. Un produit selon la revendication 1 qui est un produit de bois de construction ou de panneau.

9. Un produit selon la revendication 1 ayant un module d'élasticité ≥ 14.000 N/mm².
